# EUROPEAN PATENT APPLICATION

(11) **EP 1 640 641 A2**
(43) Date of publication of application: **29.03.2006**
(21) Application number: 05020616.8
(22) Date of filing: 21.09.2005
(51) Int. Cl.: F16H 61/28, B60K 20/08

(54) **Vehicular automatic transmission**

(30) Priority: 24.09.2004 JP 2004278539; 11.11.2004 JP 2004328133
(71) Applicant: Calsonic Kansei Corporation, Tokyo 164-8602 (JP)
(72) Inventor: Sato, Takeshi, Nakano-ku, Tokyo 164-8602 (JP); Ogasawara, Takeshi, Nakano-ku, Tokyo 164-8602 (JP); Kondo, Daisuke, Nakano-ku, Tokyo 164-8602 (JP)
(74) Representative: Grünecker, Kinkeldey, Stockmair & Schwanhäusser Anwaltssozietät

(57) **Abstract**

A vehicular automatic transmission includes an operation part (9) comprising an operation lever (10) projecting into a vehicle interior for changing ranges. The transmission includes an assist having an operation force to be transmitted from the operation lever (10) for producing an assist force to be combined with the operation force, thus outputting a driving force to an automatic transmission (16; 27; 28) for changing the ranges. The transmission includes a mechanical coupler (14; 15) coupling the operation part and the assist to each other. The operation part and the assist are located in an internal space of an instrument panel (1; 34) in the vicinity of a driver seat (2).

## Description

### CROSS-REFERENCE TO RELATED APPLICATIONS

This application is based upon and claims the benefit of priority from Japanese Patent Applications No. 2004-278539 filed on September 24, 2004 and No. 2004-328138 filed on November 11, 2004; the entire contents of which are incorporated herein by reference.

### BACKGROUND OF THE INVENTION

The invention relates to a vehicular automatic transmission.

A related vehicular automatic transmission has an operation part disposed in a floor tunnel between the driver seat and the passenger seat. The operation part includes an operation lever for changing ranges. The operation lever projects into the vehicle interior from the floor tunnel, and is operable forward and backward. An operation force is transmitted to a range changing mechanism of the automatic transmission through a cable, a rod or the like. This structure allows the operation lever to change the automatic transmission within ranges (P, R, N, D and the like).

Large operation force is required to operate the operation lever due to friction resistance in the cable or rod and mechanical resistance generated while operating the changing mechanism.

Therefore, the operation part is integrally provided with an assist, and an assist force produced by the assist is combined with the operation force of the operation lever. The combined operation force is transmitted to the automatic transmission as a driving force for changing the ranges. Thus, a driver changes the ranges with a small operation force. The length of the operation lever can be short, and the degree of freedom for layout in the vehicle interior is also enhanced (see, for example, Japanese Patent Application Laid-open No. 2004-203088).

In the related art, however, the operation lever projects into the vehicle interior from the floor tunnel between the driver seat and the passenger seat. Thus, when a passenger moves to a rear seat, the space between the driver seat and the passenger seat is not utilized as a walk-through passage.

If the position of the operation part having the operation lever is moved toward the instrumental panel in the vicinity of the driver seat, the space between the driver seat and the passenger seat is utilized as the walk-through passage. The internal space of the instrumental panel in the vicinity of the driver seat is densely-packed with other devices (air conditioner, an audio device and the like). Thus, it is difficult to dispose the integrated operation part and assist.

Another related vehicular automatic transmission includes an instrumental panel in front of the driver seat, and an operation part disposed in the floor tunnel between the driver seat and the passenger seat. The operation part includes an operation lever for changing the ranges. An operation force is transmitted to a range changing mechanism of the automatic transmission through a control cable. This structure allows the operation lever to change the automatic transmission within ranges (P, R, N, D and the like).

This automatic transmission includes a check mechanism in the operation part having the range changing mechanism and the operation lever. The check mechanism precisely limits the position angle of the output lever, and transmits a precise driving force from the control cable to the range changing mechanism. That is, the distal end of a resilient member is engaged with a concavoconvex corresponding to the range, and the precision of the position angle is secured (see, for example, Japanese Patent Application Laid-open No. 2003-301942).

In this related art, however, the check mechanism is mounted on the range changing mechanism. This structure oppresses the space in the vicinity of the range changing mechanism, and makes it difficult to lay out the range changing mechanism itself. There is no problem with mounting the check mechanism on the operation part that is integrally provided with the assist. In view of the position and the like of the operation lever projecting into the vehicle interior, positions of the operation part and the assist are displaced. The operation part and the assist are connected using an operation force transmitting mechanism (e.g., link mechanism) that transmits the operation force of the operation lever. This structure might deteriorate the precision of the position angle due to a backlash of the operation force transmitting mechanism existing in the intermediate area even if the check mechanism is mounted on the operation part. Thus, when the operation part and the assist are disposed without making them integral, the check mechanism must be mounted on the side of the range changing mechanism, and the above-described problem is caused.

### SUMMARY OF THE INVENTION

The invention is directed to a vehicular automatic transmission in which an operation part and an assist are located on the side of an instrumental panel.

The invention is also directed to a vehicular automatic transmission in which the precision of the position angle is improved even if the operation part and the assist are separated from each other.

The first aspect of the invention provides the following vehicular automatic transmission. The transmission includes an operation part including an operation lever projecting into a vehicle interior for changing ranges. The transmission includes an assist having an operation force to be transmitted from the operation lever for producing an assist force to be combined with the operation force, thus outputting a driving force to an automatic transmission for changing the ranges. The transmission includes a mechanical coupler coupling the operation part and the assist to each other. The operation part and the assist are located in an internal space of an instrument panel in the vicinity of a driver seat.

The assist may be positioned on a side of the driver seat relative to the operation part.

The assist may be offset in front of the operation part in a longitudinal direction of a vehicle.

The assist may be positioned on the upper side or lower side relative to the operation part.

The assist may be positioned in front of the operation part in a longitudinal direction of a vehicle.

A respective one of the operation part and the assist are mounted to a corresponding one of a steering member extending in a transverse direction of a vehicle and an instrumental stay extending in a vertical direction of the vehicle using the mechanical coupler.

The steering member or the instrumental stay may include a locking part lockable with a temporarily-holding pawl formed to the mechanical coupler, with the operation part and the assist coupled to each other.

The operation part may have a key interlock operation member connected thereto. The key interlock operation member is separated into a pair of connectable separate components in the vicinity of the mechanical coupler. The mechanical coupler has cutouts to temporarily hold ends of separate components respectively.

The operation part and the assist may have an operation force transmitter therebetween. The mechanical coupler may have a cover to prevent interference between the operation transmitter and the harness.

The second aspect of the invention provides the following vehicular automatic transmission. The transmission includes an operation part including an operation lever for changing ranges. The transmission includes an assist for producing an assist force to be combined with an operation force of the operation lever to rotate an output lever by the operation force, thus outputting a driving force to an automatic transmission for changing the ranges. The transmission includes an operation force transmission mechanism between the operation part and the assist for transmitting the operation force of the operation member to the assist. The transmission includes a check mechanism provided to the output lever for limiting a position angle of the output lever.

The output lever may transmit an amount of rotation of an end of the output lever about a rotation shaft to the automatic transmission as a driving force for changing the ranges. One of another end of the output lever and a housing of the assist has a check plate having a concavoconcave corresponding to the ranges. The check plate has a resilient plate having an end engageable with the concavoconvex. Another end of the resilient plate is fixed to the other of said another end of the output lever and the housing of the assist.

The check plate may be mounted to said another end of the output lever as a separate component.

The check plate is made of a resin. Said another end of the output lever is made of a metal and may be insert molded.

The output lever may transmit an amount of rotation of an end of the output lever about a rotation shaft to the automatic transmission as a driving force for changing the ranges. One of said another end of the output lever and the housing of the assist has a resilient structure having an end biased in a projecting direction. The other of said another end of the output lever and the housing of the assist has a check block having an inner peripheral surface having a concavoconvex engageable with the end of the resilient structure.

According to the first aspect, the operation part and the assist are separately formed and structured to couple to each other using the mechanical coupler. Variation of the mechanical coupler in shape permits the location of the assist relative to the operation part to be arbitrarily selected. This structure permits the assist to be located at the position that is selected not to interfere with another instrument in the internal space of the instrumental panel. The operation part and the assist are located on the side of the instrumental panel, thus allowing the space between the driver seat and the passenger seat to be used as a walk-through passage.

The assist is located on the driver seat side relative to the operation part, and does not interfere with the air conditioner located at the central portion in the transverse direction of the vehicle.

The assist is offset in front of the operation part in the longitudinal direction of the vehicle. The offset allows the knees corresponding position of the instrumental panel to be displaced forward (in the direction of coming off from the knees), thus ensuring an enlarged space for the knees.

The assist is positioned on the upper side or lower side relative to the operation part, thus ensuring an enlarged space for knees.

The operation part and the assist are mounted to the steering member extending transversely of a vehicle and the instrumental stay extending vertically of the vehicle, thus enhancing each mounting rigidity of the operation part and the assist using the mechanical coupler.

With the operation part and the assist coupled to each other, the temporarily-holding pawl formed to the mechanical coupler locks with the lock part of the steering member or the instrumental stay. This structure temporarily holds the operation part or the assist as a heavy object, thus facilitating the mounting operation to the steering member or the instrumental stay.

When the operation part and the assist are mounted, the key interlock operation member does not interfere with the mounting operation, thus facilitating the mounting operation of the operation part or the instrumental stay. The separate components of the key interlock operation member are temporarily held within the cutouts formed to the mechanical coupler respectively, thus stabilizing the key interlock operation member separated, not interfering with the mounting operation.

The cover formed to the mechanical coupler prevents interference with the harness and the operation force transmitter provided between the operation part and the assist, without problem with the harness having an elongate excess portion sagged.

According to the second aspect, the check mechanism is provided to the output lever on the side of the assist. This structure is not affected by the backlash of the operation force transmitter, thus improving the precision of the position angle corresponding to each range.

The check mechanism includes the check plate formed to one of another end of the output lever and the housing of the assist, and the resilient plate provided to the other thereof, thus allowing the position angle to be securely limited with a smaller number of components.

The check plate with the concavoconvex is mounted to the output lever as a separate component, thus facilitating fabrication of the output lever itself

The resinous check plate achieves a reduction in weight and sound due to striking and clapping. The metal output lever is insert molded, thus achieving a precise positional relationship between the check plate and the output lever.

The check mechanism is constituted with a resilient structure having an end biased in a projecting direction and the check block having an inner peripheral surface having a concavoconvex engageable with the end of the resilient structure, thus achieving the check mechanism in the smaller size.

### BRIEF DESCRIPTION OF THE ACCOMPANYING DRAWINGS

Fig. 1 is a perspective view illustrating an instrumental panel and an operation lever according to a first embodiment;
Fig. 2 is a sectional view taken along the arrow SA-SA in Fig. 1;
Fig. 3 is a perspective view illustrating the operation part and the assist mounted in Fig. 2;
Fig. 4 is a perspective view illustrating the operation part and the assist mounted in Fig. 2 as viewed from another angle;
Fig. 5 is an exploded perspective view illustrating the operation part in Figs. 3 and 4;
Fig. 6 is an exploded perspective view illustrating the operation part, a bracket, a link mechanism and the assist in Figs. 3 and 4;
Fig. 7 is a sectional view illustrating an instrumental panel according to a second embodiment;
Fig. 8 is a sectional view illustrating an instrumental panel according to a third embodiment;
Fig. 9 is a perspective view illustrating a separated key interlock operation member according to a fourth embodiment;
Fig. 10 is a perspective view illustrating the interlocked key interlock operation member in Fig. 9;
Fig. 11 is a sectional view of an essential portion of an instrumental panel illustrating a switch panel according to a fifth embodiment before the switch panel is mounted;
Fig. 12 is a sectional view of an essential portion of the instrumental panel illustrating the switch panel in Fig. 11 after it is mounted;
Fig. 13 is an exploded perspective view illustrating a cover and a bracket in Figs. 11 and 12;
Fig. 14 is a perspective view illustrating an assembly in which a harness on the side of a switch is coupled to the bracket in Figs. 11 and 12;
Fig. 15 is a perspective view illustrating the bracket and the harness on the side of the operation part to be coupled to the bracket in Figs. 11 and 12;
Fig. 16 is a perspective view illustrating the assembly in which respective harnesses on the side of the switch and on the side of the operation part are mounted on the bracket in Figs. 11 and 12;
Fig. 17 is a sectional view taken along the arrow SA-SA in Fig. 1;

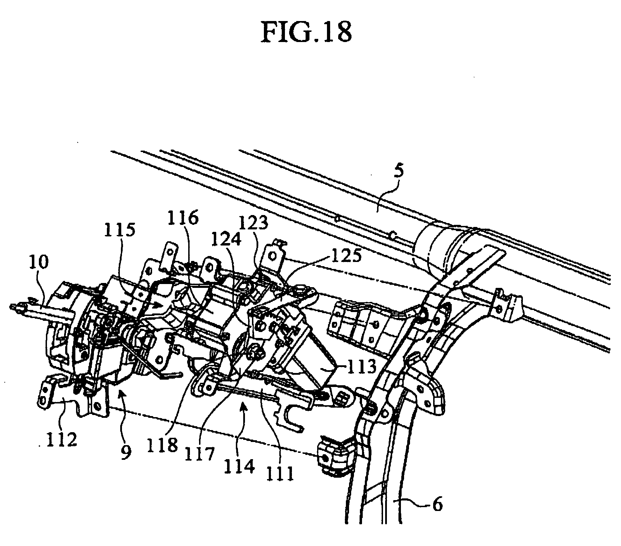

Fig. 18 is an exploded perspective view illustrating the operation part and assist assembled with each other in Fig. 17;

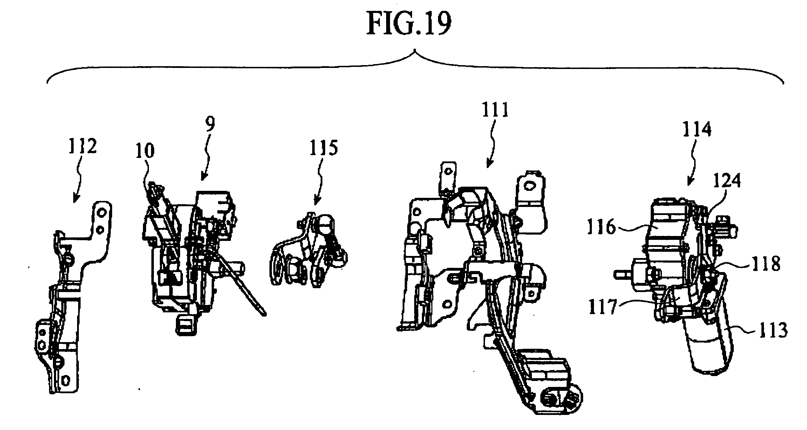

Fig. 19 is an exploded perspective view illustrating the operation part, the bracket, the link mechanism and the assist in Fig. 18;
Fig. 20 is a perspective view illustrating the assist in Fig. 17;
Fig. 21 is a perspective view illustrating an output lever according to a seventh embodiment;
Fig. 22 is a perspective view illustrating an assist according to an eighth embodiment; and
Fig. 23 is an exploded perspective view illustrating a resilient structure in Fig. 22.

### DETAILED DESCRIPTION OF THE PREFERRED EMBODIMENTS

The object of the invention is to provide a vehicular automatic transmission in which an operation part and an assist can be disposed on the side of an instrumental panel. The vehicular automatic transmission includes an operation part having an operation lever that projects into a vehicle interior and is used to change the ranges. The vehicular automatic transmission includes an assist. The operation force of the operation lever is transmitted to the assist, and the assist produces an assist force that is to be combined with the operation force so as to output a driving force for changing the ranges to the automatic transmission. The operation part and the assist are coupled to each other using a mechanical joiner, and are disposed in the internal space in an instrumental panel in the vicinity of the driver seat. Hereinafter, embodiments of the invention will be described with reference to the drawings.

In the respective embodiments, like parts are designated with like reference characters, and redundant descriptions are omitted. Structures in common to more than one embodiment are described only in the one that focuses on the respective structures. Therefore, even though like structures are shown in different embodiments, the redundant descriptions are omitted in ones that focus on other structures.

### First Embodiment

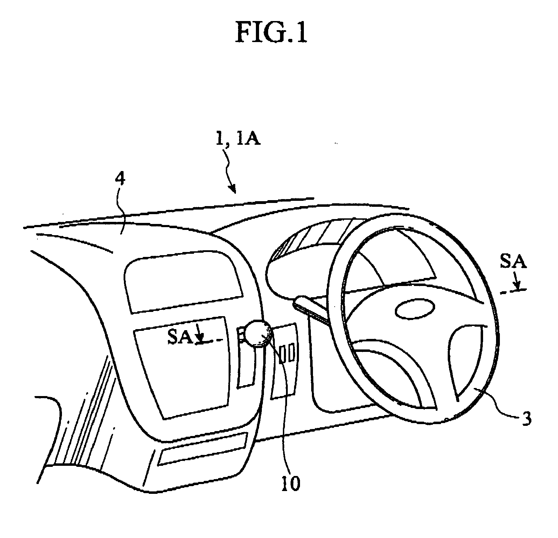

With reference to Figs. 1 to 6, an instrumental panel 1 includes a steering wheel 3 on the side of the driver seat 2. The instrumental panel 1 includes a center cluster 4 that slightly projects into a vehicle interior as compared with other portions and is located at a central portion in the widthwise direction of a vehicle.

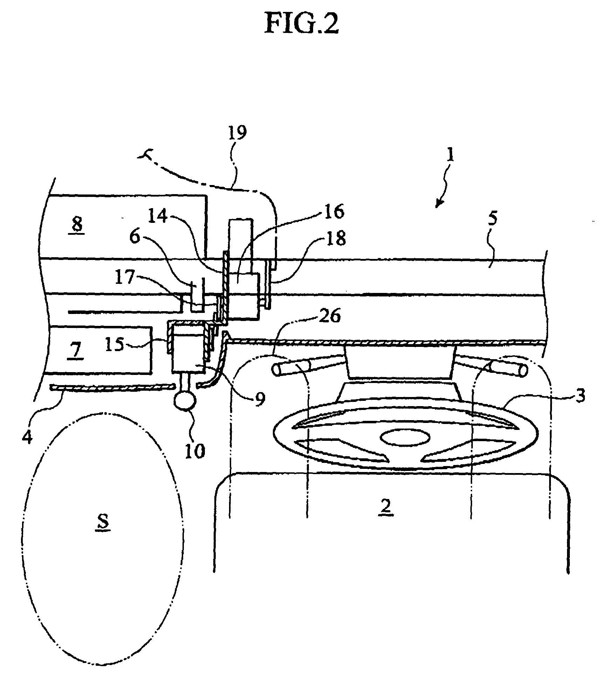

With reference to Figs. 2, the instrumental panel 1 includes a steering member 5 disposed therein in the widthwise direction of the vehicle. The portions of the steering member 5 coinciding to both ends of the center cluster 4 are connected to a floor (not illustrated) using an instrumental stay 6. The center cluster 4 is provided therein with an audio device 7 disposed on the front side and an air conditioner 8 disposed on the rear side.

The center cluster 4 includes an operation part 9 disposed on an end on the side of the driver seat 2. The operation part 9 includes an operation lever 10 that projects from the operation part 9 toward inside of the vehicle interior. The operation lever 10 can be operated vertically for changing ranges. The operation lever 10 is shorter in length than a conventional operation lever, and is compact. Thus, the operation lever 10 has a smaller amount of the projection into the vehicle interior, and this does not reduce the degree of freedom for the interior layout.

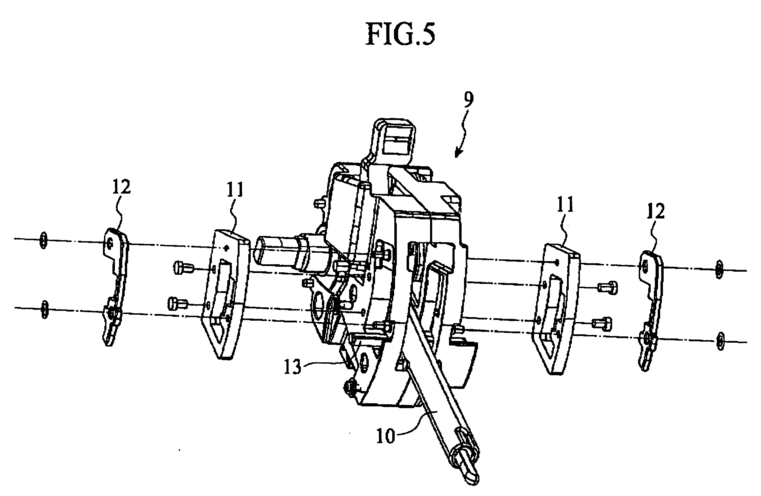

With reference to Fig. 5, position gates are set on the opposite side surfaces of the operation part 9. The position gates correspond to respective range positions by a position plate 11 and a gate damper 12. Engagement between the position gate and a position pin 13 of the operation lever 10 selects respective ranges (P, R, N and D). The operation lever 10 is provided at the rotation fulcrum with a torque sensor (not illustrated). If the position plate 11 and the gate damper 12 are replaced by other ones, a position gate corresponding to another type of vehicle and thus, most portions of the operation part 9 are commonly used in accordance with the vehicle type.

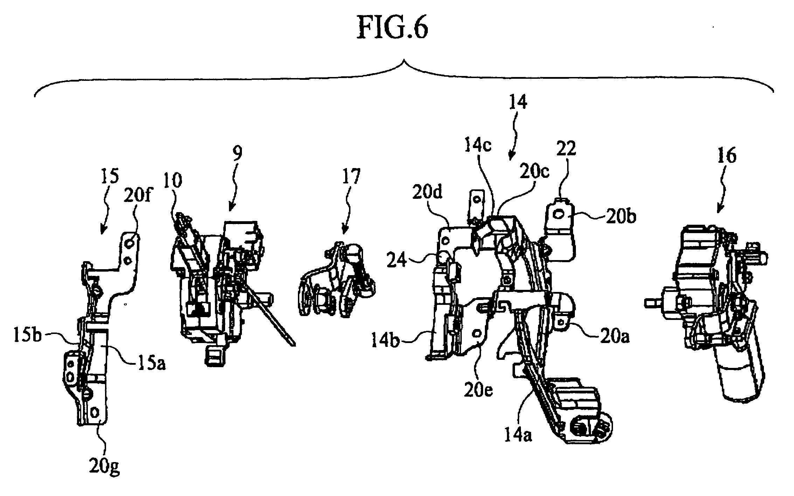

With reference to Fig. 6, the operation part 9 has, at the forward offset location on the side of the driver seat 2, an assist 16 having an electric motor using brackets 14 and 15 as "mechanical joiners". The operation part 9 and the assist 16 are connected to each other using a link mechanism 17 as an "operation force transmitter". Therefore, the operation force of the operation lever 10 is transmitted to the assist 16 through the link mechanism 17 to rotate the output lever 18 (see Fig. 2) of the assist 16. This rotation allows a driving force necessary for changing the ranges to be transmitted to the automatic transmission using a transmission cable 19.

Only a manual force by the operation lever 10 places a heavy burden on operators, and the rotation force by the electric motor of the assist 16 is combined with a manual operation force of the operation lever 10 as an assist force. Thus, even if the length of the operation lever 10 is shortened, a force necessary for operating the operation lever 10 is not increased. More specifically, voltage to be applied to the assist 16 is controlled in accordance with torque detected by the torque sensor (not illustrated)) of the operation part 9. The operation part 9 and the assist 16 are connected to each other using the link mechanism 17. Even when a power supply system or a control system becomes out of order, it is possible to temporarily change the ranges manually using the increased operation force without operating the assist 16.

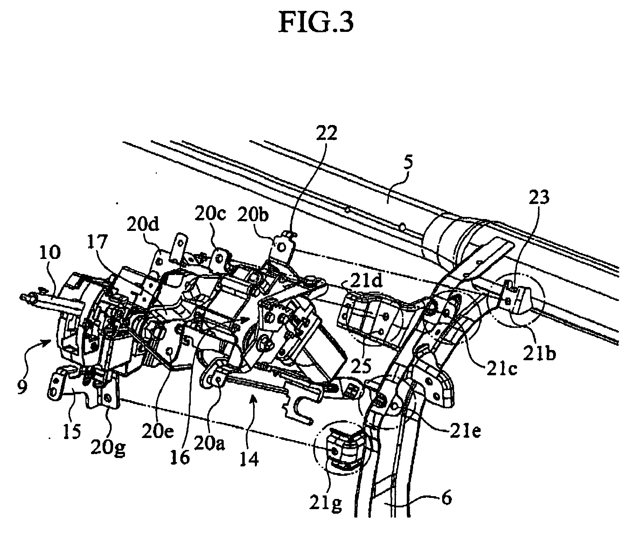

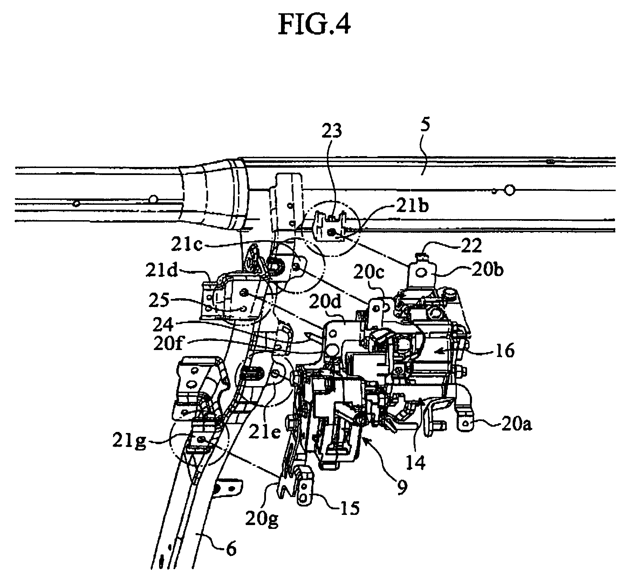

With reference to Figs. 3 and 4, the assist 16 is located in the diagonal front of the operation part 9 on the side of the driver seat 2, and the brackets 14 and 15 are shaped as a crank as viewed from the above. The bracket 14 includes a first base 14a for mounting the assist 16. The bracket 14 includes a second base 14b for mounting the operation part 9. The second base 14b and the first base 14a are opposite to each other. The bracket 14 includes a third base 14c that connects the ends of the first base 14a and the second base 14b. The bracket 15 includes first and second bases 15a and 15b on which the operation part 9 is mounted. The second base 15b extends normal to the first base 15a. The operation part 9 is held between the second bases 14b and 15b. The brackets 14 and 15 include fitting pieces 20a to 20g. The steering member 5 and the instrumental stay 6 include receiver surfaces 21b to 21d and 21g corresponding to the fitting pieces 20b to 20g. The fitting pieces 20b to 20g are fastened to the receiver surfaces 21b to 21d and 21g using bolts and nuts. The first base 14a includes the fitting piece 20b fixed to the receiver surface 21b of the steering member 5. The third base 14c includes the fitting piece 20c fixed to the receiver surface 21c of the instrumental stay 6. The third base 14c includes the fitting piece 20d fixed to the receiver surface 21d of the instrumental stay 6. The third base 14c includes the fitting piece 20e fixed to the receiver surface 21e of the instrumental stay 6. The first base 15a includes the fitting piece 20f mounted on the receiver surface 21d such that the fitting piece 20f is stacked on the fitting piece 20d of the bracket 15. The first base 15a includes the fitting piece 20g fixed to the receiver surface 21g of the instrumental stay 6.

The uppermost fitting piece 20b of the bracket 14 includes a temporarily-holding pawl 22, and the receiver surface21b corresponding thereto includes a retaining portion 23 capable of retaining the temporarily-holding pawl 22. The portion 20d of the fitting piece 20 includes a locate pin 24, and the receiver surface 21d corresponding thereto defines a locate hole 25.

Before the step of mounting the instrumental panel 1 on the vehicle body, the operation part 9 and the assist 16 as heavy objects that are integrated with each other using the brackets 14 and 15 are mounted on the steering member 5 and the instrumental stay 6. During this operation, the temporarily-holding pawl 22 formed on the bracket 14 is locked to the locking portion 23 formed on the receiver surface 21 of the steering member 5. The locking portion temporarily holds the suspended operation part 9 and the assist 16.

The operator is not required to manually support the entire weight of the operation part 9 and the assist 16, thus improving the operability. With this state, the locate pin 24 formed on a portion of the bracket 14 is inserted into the locate hole 25 formed in the receiver surface 21 of a portion of the instrumental stay 6. This insertion operation positions all of the fitting pieces 20 and the receiver surfaces 21, thus facilitating the subsequent mounting operation.

In addition to the easy mounting operation, the operation part 9 and the assist 16 are mounted on both the steering member 5 extending along the widthwise direction of the vehicle and the instrumental stay 6 extending in the vertical direction using the brackets 14 and 15. With this mounting operation, each mounting rigidity of the operation part 9 and the assist 16 are also improved.

According to this embodiment, the separate operation part 9 and the assist 16 are coupled to each other by the brackets 14 and 15. The assist 16 with respect to the operation part 9 is arbitrarily selected in position such that the assist 16 does not interfere with other devices in the instrumental panel 1. More specifically, the assist 16 is disposed on the side of the driver seat 2. This layout avoids the interference of the assist 16 with the air conditioner 8.

The operation part 9 and the assist 16 are disposed on the side of the instrumental panel 1. This arrangement allows the space S (see Fig. 2) to be used between the driver seat 2 and the passenger seat, where the operation lever is conventionally provided, as a walk-through passage.

The assist 16 is forwardly offset in position with respect to the operation part 9. This offset sets the right end position of the center cluster 4 proximate to the central portion of the vehicle body. Thus, the space around the left knee 26 of the driver is widely secured.

### Second Embodiment

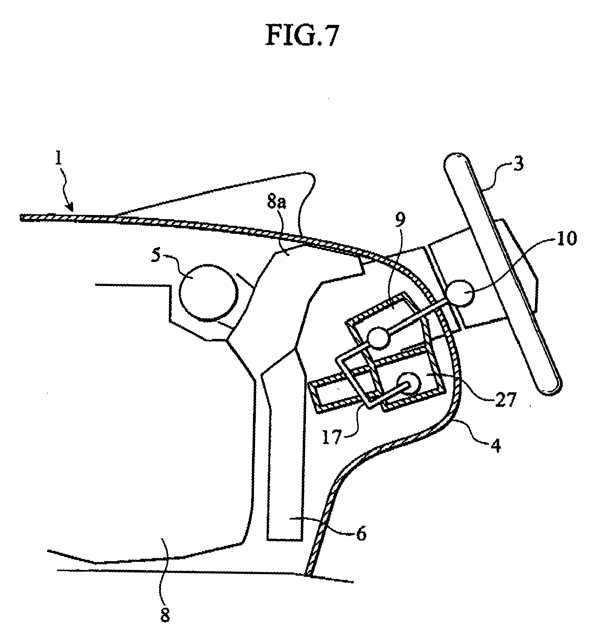

With reference to Fig. 7, in the second embodiment, an assist 27 is disposed below the operation part 9 so that the assist 27 does not interfere with a duct 8a of the air conditioner 8. In the second embodiment, like the first embodiment, the knee space of the driver is widely secured.

### Third Embodiment

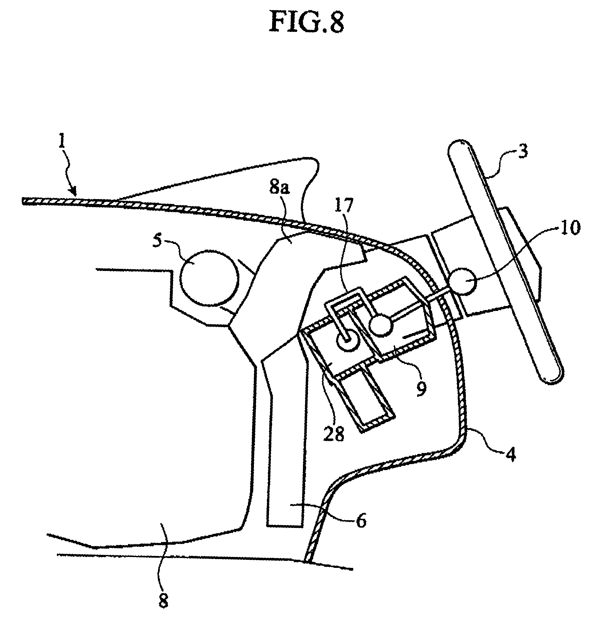

With reference to Fig. 8, in the third embodiment, an assist 28 is disposed in front of the operation part 9 so that the assist 28 does not interfere with the instrumental stay 6. In the third embodiment, like the first and second embodiment, the knee space of the driver is widely secured.

### Fourth Embodiment

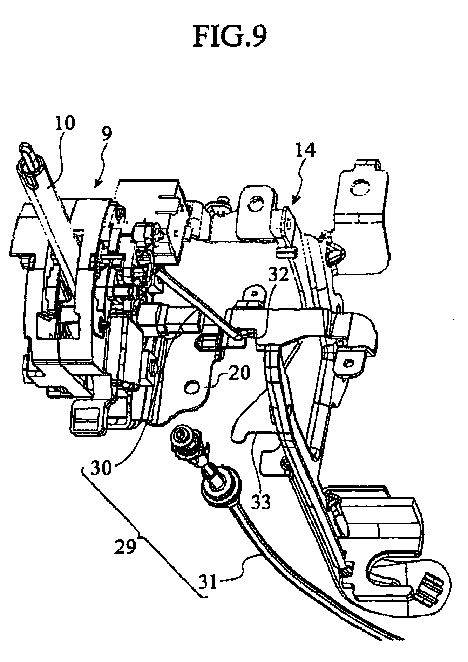

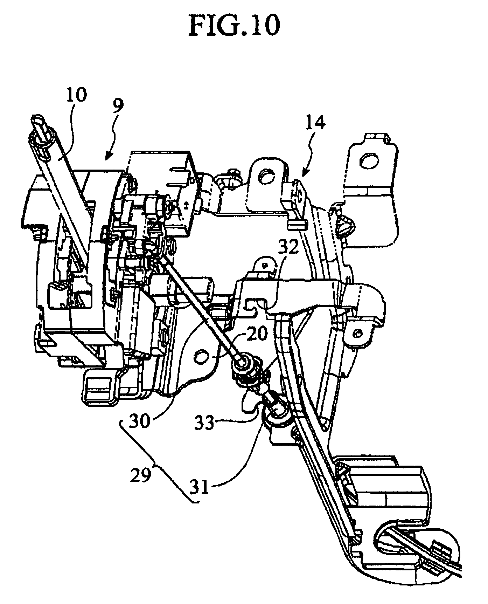

With reference to Figs. 9 and 10, the operation part 9 includes a lock lever (not illustrated) positioned in correspondence with the parking (P) in the position gate. The lock lever supports the position pin located at the parking from below, and maintains the parking lock.

The lock lever is connected to the upper end of a key interlock operation member 29. The lower end of the key interlock operation member 29 is connected to a solenoid (not illustrated). When an ignition key is operated, the lock lever is pulled downward using the key interlock operation member 29, the lock achieved by the lock lever is released to allow the changing operation of the ranges.

The key interlock operation member 29 is conventionally one continuous rod-like member. The key interlock operation member 29 comes into contact with one or some of the fitting pieces 20 of the bracket 14 and interferes with the mounting operation of the fitting pieces 20.

In this embodiment, the key interlock operation member 29 is separated into an upper rod 30 connected to the operation part 9 and a lower cable 31 connected to the solenoid. The bracket 14 is formed with cutouts 32 and 33 that respectively hold the lower end of the rod 30 and the upper end of the cable 31. The cutouts 82 and 33 are positioned not to interfere with the rod 30 and the cable 31 during mounting of the fitting pieces 20. This positioning facilitates the mounting operation of the bracket 14. After mounting of the bracket 14, the rod 30 and the cable 31 are detached from the cutouts 32 and 33 to be connected to the corresponding ends, respectively, thus permitting operation by the solenoid.

### Fifth Embodiment

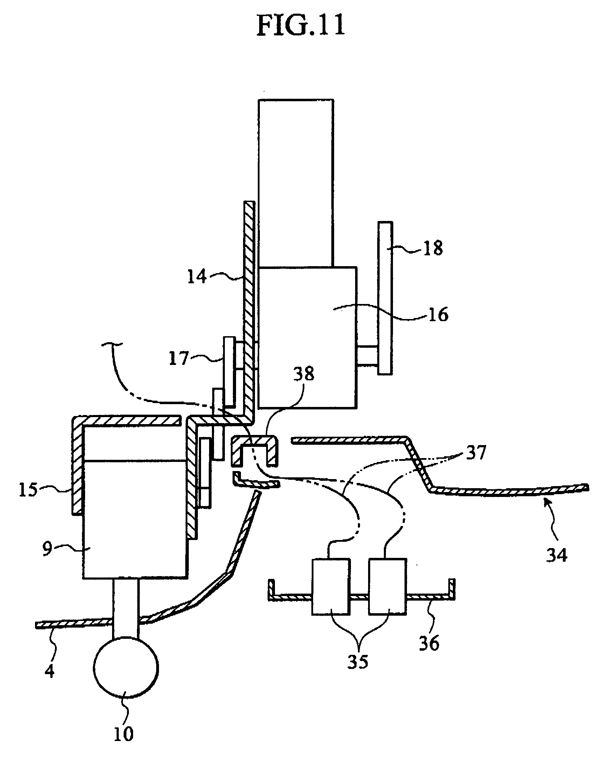

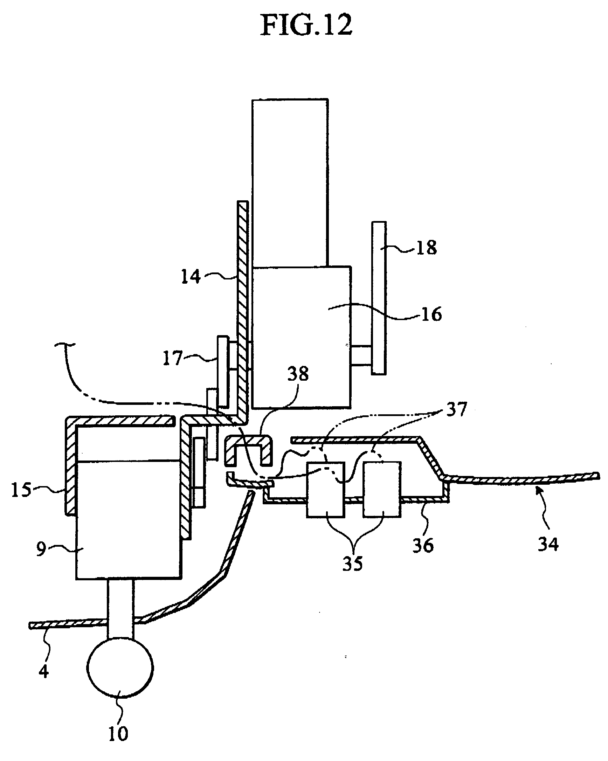

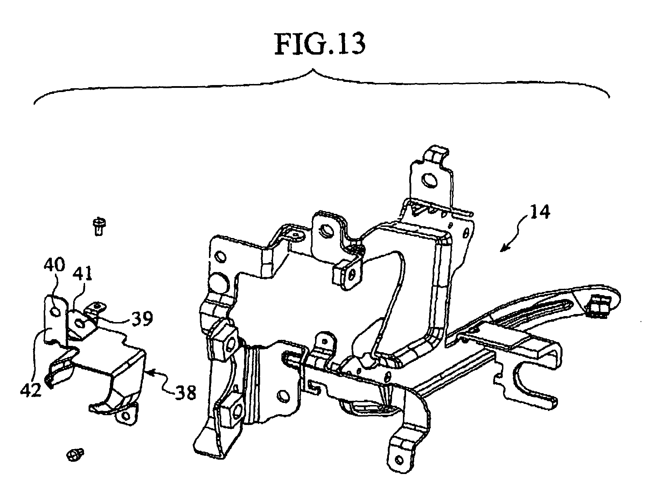

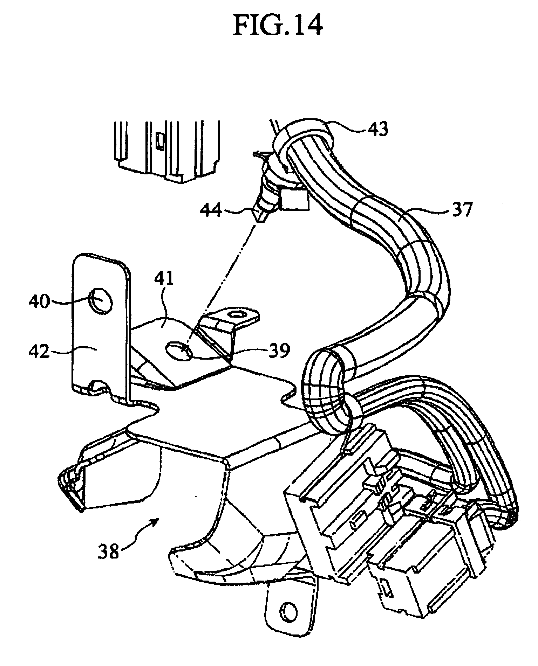

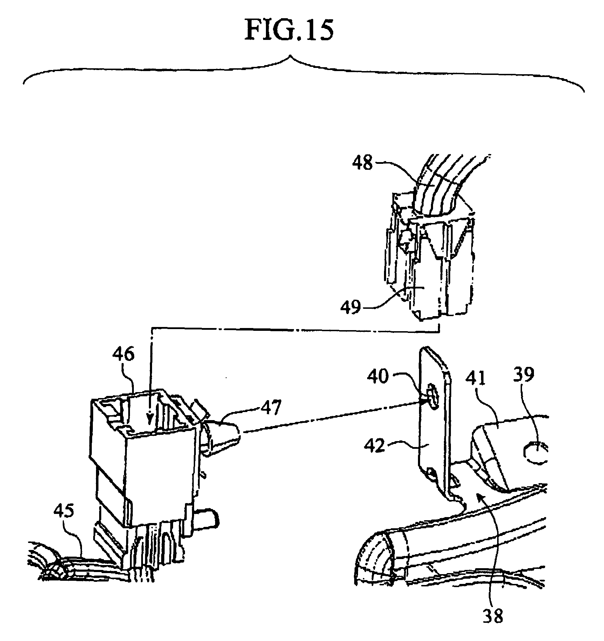

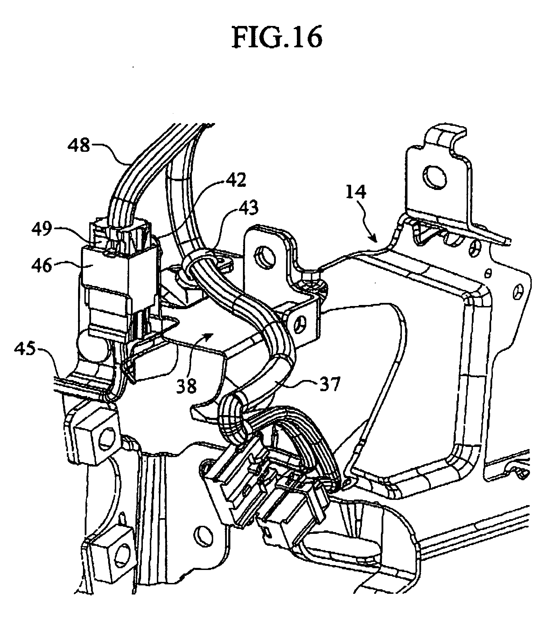

With reference to Figs. 11 to 16, the instrumental panel 34 of the fifth embodiment includes a switch panel 36 having switches 35 mounted on a position coinciding with the assist 16. The switches 35 include a harness extending therefrom into the instrumental panel 34. The length of the harness 37 is preset longer (elongate excess portion is provided) so that the mounting operation of the switch panel 36 is facilitated. Therefore, after mounting of the switch panel 36, the harness 37 sags, and the harness 37 can interfere with the link mechanism 17 located between the operation part 9 and the assist 16.

Thus, a cover 38 for avoiding the interference between the harness 37 and the link mechanism 17 is mounted on the bracket 14 of this embodiment. The cover 38 is positioned such as to cover over the link mechanism 17 from the harness 37. The cover 38 prevents the elongate excess portion of the harness 37 on the side of the switch 35 from interfering with the link mechanism 17.

The cover 38 includes a fixing portion 41 and a fixing piece 42 having clip holes 39 and 40, respectively. The clip hole 39 of the fixing portion 41 is engaged with the clip 44 of a band 43 that ties up the harness 37 from the switch 35. The clip hole 40 of the fixing piece 42 is engaged with a clip 47 formed on the connector 46 of a harness 45 on the side of the operation part 9. The connector 46 is connected to the connector 49 of the harness 48 from above.

Although the operation part 9 and the assist 16 are connected to each other using the link mechanism 17 as the operation force transmitter in the above embodiments, they may be connected to each other using a cable mechanism.

### Sixth Embodiment

The object of the invention is to provide a vehicular automatic transmission in which precision of a position angle is improved even if an operation part and an assist are disposed separately from each other without integrally forming them. This object is achieved by providing an output lever with a check mechanism that limits the position angle of the output lever. The embodiments of the invention will be described with reference to the drawings.

The operation part 9 includes an assist 114 having an electric motor 113 using brackets 111 and 112. The assist 114 is located at the front offset position on the side of the driver seat 2. The operation part 9 and the assist 114 are connected to each other using a link mechanism 115 as an "operation force transmitting mechanism".

The assist 114 is disposed in the diagonal front of the operation part 9, and the brackets 111 and 112 are shaped in a crank as viewed from above. Before the step of mounting the instrumental panel 1 on a vehicle body, the operation part 9 and the assist 114 are mounted on the steering member 5 and the instrumental stay 6 by means of the brackets 111 and 112, with them 9 and 114 connected to each other using the link mechanism 15A.

The operation part 9 and the assist 114 are formed separately from each other, and they 9 and 114 are joined to each other using the brackets 111 and 112. The assist 114 with respect to the operation part 9 is arbitrarily set in position such that the assist 114 does not interfere with other devices in the instrumental panel 1. More specifically, the assist 114 is located on the side of the driver seat 2 to avoid interference of the assist 114 with the air conditioner 8.

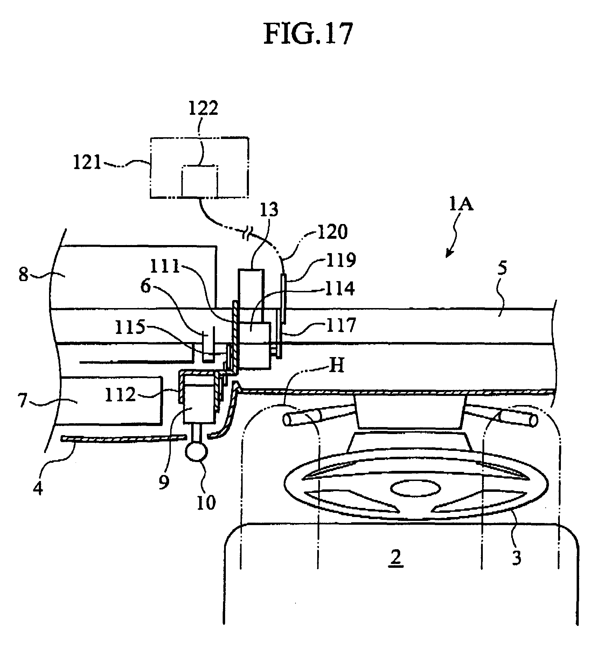

The side surface of a housing 116 of the assist 114 rotatably supports an output lever 117 about the rotation shaft 118. The operation force of the operation lever 10 is transmitted to the output lever 117 through the link mechanism 115 to rotate the output lever 117. One end of the output lever 117 is connected to the transmission rod 119. The transmission rod 119 is connected to a control cable 120. Rotation of the output lever 117 permits an amount of rotation of one end of the output lever 117 to be transmitted to the range changing mechanism 122 of an automatic transmission 121 as a driving force through the control cable 120 (see Fig. 17). A symbol H in Fig. 17 represents a knee of the driver.

Only a manual force by the operation lever 10 burdens operators too much, and the rotation force by the electric motor 113 of the assist 114 is combined with a manual operation force of the operation lever 10 as an assist force. Thus, even if the length of the operation lever 10 is shortened, a force necessary for operating the operation lever 10 does not increase. More specifically, voltage to be applied to the assist 114 is controlled in accordance with torque detected by the torque sensor (not illustrated) of the operation part 9. The operation part 9 and the assist 114 are connected to each other using the link mechanism x15. Even when a power supply system or a control system becomes out of order, it is possible to temporarily change the ranges manually using the increased operation force without operating the assist 114.

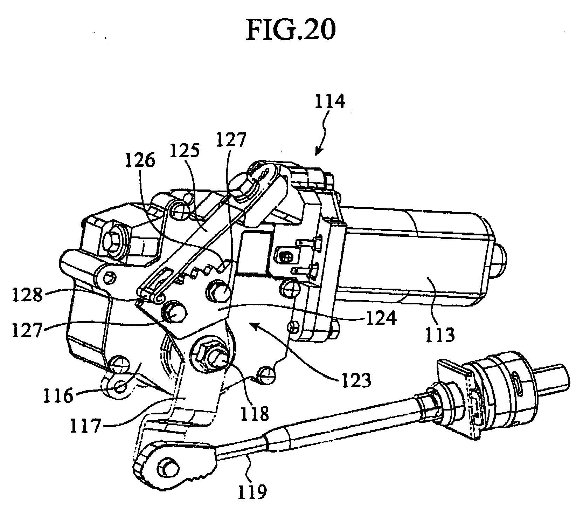

With reference to Fig. 20, the output lever 117 of the assist 114 includes a check mechanism 123 that precisely limits a position angle corresponding to each range.

The check mechanism 123 includes a check plate 124 mounted on the output lever 117, and a resilient plate 125 mounted on the housing 116 of the assist 114. The check plate 124 is of a fan shape having a concavoconvex 126 corresponding to each range. The check plate 124 is mounted on the other end of the output lever 117 by a bolt 127 as a separate part.

The base end of the resilient plate 125 is fixed to the upper portion of the housing 116 of the assist 114. The resilient plate 125 includes a tubular distal end 128 that is engaged with the concavoconvex of the check plate 124. The engagement between the distal end 128 of the resilient plate 125 and the concavoconvex 126 of the check plate 124 precisely limits the position angle of the output lever 117 in response to each range.

In this embodiment, the check mechanism 123 is mounted on the output lever 117 on the side of the assist 114. When the operation part 9 and the assist 114 are connected to each other using the link mechanism 115, this structure is not affected by backlash of the link mechanism 115, thus improving the precision of the position angle corresponding to each range.

The check mechanism 123 including the check plate 124 and the resilient plate 125 reduces the number of components.

The check plate 124 having the concavoconvex 126 is mounted on the output lever 117 as a separate component. This structure simplifies the shape of the output lever 117, thus facilitating formation of the output lever 117.

### Seventh Embodiment

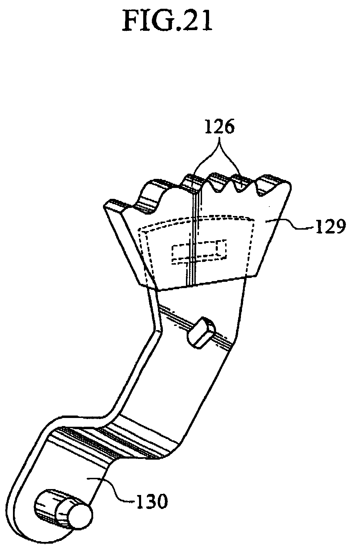

With reference to Fig. 21, a check plate 129 is made of a resin. The other end of a metal output lever 130 is insert-molded together with the check plate 129 during the resin formation.

The resin check plate 129 reduces the weight and striking sound. The metal output lever 130 is insert-molded on the resin check plate 129. The insert molding achieves a precise positional relationship between the check plate 129 and the output lever 130.

### Eighth Embodiment

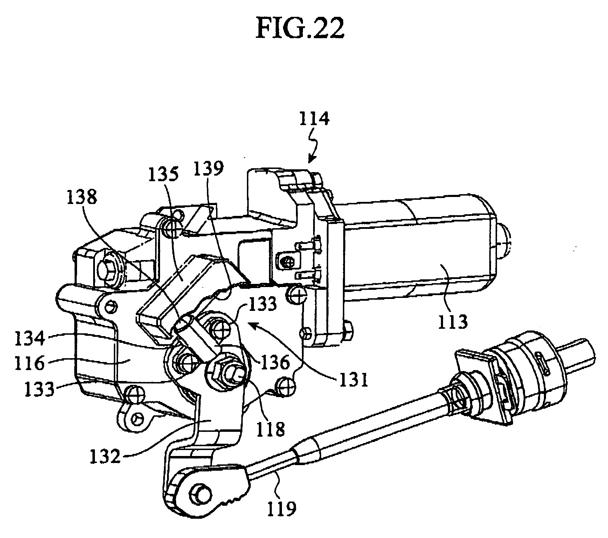

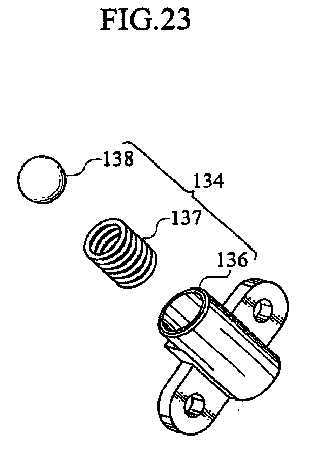

With reference to Figs. 22 and 23, a check mechanism 131 includes a resilient structure 134 fixed to the other end of an output lever 132 by means of a bolt 133. The check mechanism 131 includes a check block 135 fixed to the side surface of the housing 116 of the assist 114.

The resilient structure 134 is provided with a spring 137 within a tubular holder 136. The resilient structure 134 biases a ball 138 as a "distal end" in a projecting direction by means of the spring 137. The inlet of the tubular holder 136 is slightly smaller than the ball 138, and the ball does not come out from the holder 136.

The check block 135 has a curved inner surface that defines a concavoconvex 139 thereon. The spring 137 biases the ball 138 of the resilient structure 134 against the concavoconvex 139 to engage the ball 138 with the concavoconvex 139. The engagement between the ball 138 and the concavoconvex 139 precisely limits the position angle of the output lever 132 in response to each range.

According to this embodiment, the check mechanism 131 including the resilient structure 134 and the check block 135 is smaller in size.

In this embodiment, the check plate 124 and the resilient structure 134 may be mounted on the assist 114, and the resilient plate 125 and the check block 135 may be mounted on the output levers 117 and 132.

Although the invention has been described above by reference to certain embodiments of the invention, the invention is not limited to the embodiments described above. Modifications and variations of the embodiments described above will occur to those skilled in the art, in light of the above teachings. The scope of the invention is defined with reference to the following claims.

## Claims

1. A vehicular automatic transmission comprising:
an operation part (9) comprising an operation lever (10) projecting into a vehicle interior for changing ranges;
an assist having an operation force to be transmitted from the operation lever (10) for producing an assist force to be combined with the operation force, thus outputting a driving force to an automatic transmission (16; 27; 28) for changing the ranges; and
a mechanical coupler (14; 15) coupling the operation part and the assist to each other,
wherein the operation part and the assist are located in an internal space of an instrument panel (1; 34) in the vicinity of a driver seat (2).

2. The vehicular automatic transmission according to claim 1 comprising:
wherein the assist (16; 27; 28) is positioned on a side of the driver seat (2) relative to the operation part (9).

3. The vehicular automatic transmission according to claim 2,
wherein the assist (16; 27; 28) is offset in front of the operation part (9) in a longitudinal direction of a vehicle.

4. The vehicular automatic transmission according to claim 1,
wherein the assist (16; 27; 28) is positioned on the upper side or lower side relative to the operation part (9).

5. The vehicular automatic transmission according to claim 1,
wherein the assist (16; 27; 28) is positioned in front of the operation part (9) in a longitudinal direction of a vehicle.

6. The vehicular automatic transmission according to claim 1,
wherein a respective one of the operation part (9) and the assist (16; 27; 28) are mounted to a corresponding one of a steering member (5) extending in a transverse direction of a vehicle and an instrumental stay (6) extending in a vertical direction of the vehicle using the mechanical coupler (14; 15).

7. The vehicular automatic transmission according to claim 1,
wherein the steering member (5) or the instrumental stay (6) includes a locking part (23) lockable with a temporarily-holding pawl (22) formed to the mechanical coupler (14; 15), with the operation part (9) and the assist (16; 27; 28) coupled to each other.

8. The vehicular automatic transmission according to claim 1,
wherein the operation part (9) has a key interlock operation member (29) connected thereto,
wherein the key interlock operation member (29) is separated into a pair of connectable separate components (30; 31) in the vicinity of the mechanical coupler (14; 15),
wherein the mechanical coupler (14; 15) has cutouts to temporarily hold ends of separate components (30; 31) respectively.

9. The vehicular automatic transmission according to claim 1,
wherein the operation part (9) and the assist (16; 27; 28) have an operation force transmitter (17) therebetween,
wherein the mechanical coupler (14; 15) has a cover (38) to prevent interference between the operation transmitter (17) and the harness (37).

10. The vehicular automatic transmission comprising:
an operation part (109) comprising an operation lever (110) for changing ranges;
an assist (114) for producing an assist force to be combined with an operation force of the operation lever (110) to rotate an output lever (117) by the operation force, thus outputting a driving force to an automatic transmission (121) for changing the ranges;
an operation force transmission mechanism (115) between the operation part and the assist for transmitting the operation force of the operation member (110) to the assist (114); and
a check mechanism (123) provided to the output lever (117) for limiting a position angle of the output lever (117).

11. The vehicular automatic transmission according to claim 10,
wherein the output lever (117) transmits an amount of rotation of an end of the output lever about a rotation shaft (118) to the automatic transmission (121) as a driving force for changing the ranges,
wherein one of another end of the output lever (117) and a housing (116) of the assist (114) has a check plate (124) having a concavoconcave (126) corresponding to the ranges,
wherein the check plate (124) has a resilient plate (125) having an end (128) engageable with the concavoconvex (126),
wherein another end of the resilient plate (125) is fixed to the other of said another end of the output lever (117) and the housing (116) of the assist (114).

12. The vehicular automatic transmission according to claim 11,
wherein the check plate is mounted to said another end of the output lever (117) as a separate component.

13. The vehicular automatic transmission according to claim 12,
wherein the check plate (129) is made of a resin,
wherein said another end of the output lever (130) made of a metal is insert molded.

14. The vehicular automatic transmission according to claim 10,
wherein the output lever (117) transmits an amount of rotation of an end of the output lever about a rotation shaft (118) to the automatic transmission (121) as a driving force for changing the ranges,
wherein one of said another end of the output lever (117) and the housing (116) of the assist (114) has a resilient structure (34) having an end (138) biased in a projecting direction,
wherein the other of said another end of the output lever (117) and the housing (116) of the assist (114) has a check block (135) having an inner peripheral surface having a concavoconvex (139) engageable with the end of the resilient structure (134).
